# EUROPEAN PATENT SPECIFICATION

(11) **EP 1 086 796 B1**
(45) Date of publication and mention of the grant of the patent: **17.11.2004**
(21) Application number: 00308238.5
(22) Date of filing: 20.09.2000
(51) Int. Cl.: B29B 17/00

(54) **Method of manufacturing a solid product from recyclable plastics materials, and said product**
Verfahren zur Herstellung eines festen Endprodukts aus wiederverwertbaren Kunststoffmaterialien, und dieses Endprodukt
Procédé de fabrication d'un produit solide en matériaux plastiques recyclables, et un tel produit

(30) Priority: 21.09.1999 AR 9904747; 18.09.2000 AR 0004891
(43) Date of publication of application: 28.03.2001
(73) Proprietor: Barchena, Juan Carlos, Las Parejas, 2505 Santa Fe (AR)
(72) Inventor: Barchena, Juan Carlos, Las Parejas, 2505 Santa Fe (AR)
(74) Representative: Evens, Paul Jonathan

(56) References cited:
- CA-A- 2 224 531
- CH-A- 610 235
- DE-A- 4 221 353
- US-A- 4 187 352
- US-A- 5 522 554

## Description

### Field of the Invention:

The present invention is referred to an industrial product, as a light post, a lamina or plates for manufacturing several products such as furniture or the like, which is obtained from plastics-based sweeping material (refuse), which is obtained from domiciliary sweepings recycled materials.

The present invention will also be referred to a method for obtaining this plastics-based recycled material.

The present application also discloses transportable equipment that is especially useful to recycle plastics-based domiciliary sweepings (domestic refuse), especially plastic trash habitually found in rubbish dumps such as plastic bottles of drinks, cleaning products, etc.

### Background of the invention:

It is already widely known that plastic-based sweeping materials usually take hundreds of years in degrading itself. The enormous population growth that the great urban centre underwent in the last decades has caused an exponential growth in the amount of sweeping materials, this is the reason why the environmental contamination has undergone a proportional increase to the previous phenomenon.

It is for that reason that industrialized countries of the world have developed and taken active recycling measures for treating sweepings materials, trying to convince to the population on the importance of recovering some materials such as glass, paper, plastics, etc., to avoid that some highly polluting products normally found in the sweepings materials become mixed with other organic sweeping materials that can be naturally recycled directly, by its fast normal decomposition.

Most of the habitually used plastic packages in the industry are made from non-degradable polymeric materials generating a high contamination level when they are disposed. At the present time, the practice has demonstrated that in spite of the efforts that the authorities of many countries make, and the campaigns that are made to manage the objective of recycling domiciliary sweepings, it was not still possible to manage an efficient separation of highly polluting domiciliary sweeping materials (as drink packages or cleaning products) from organic materials. For that reason there is still a need of trying to efficiently recycle those polluting sweeping materials so as to be able to stop or to try to restrain the contamination process said polluting materials generate.

Several industrial equipments are known in the market that uses sweeping materials as raw materials for manufacturing industrial products. For example, Argentine Patent Application Serial N° 334,493 published on July 18^{th}, 1997 may be mentioned. This application is referred to a method and equipment with which boards from recycled materials may be manufactured. In this case, raw material includes polyethylene, polypropylene, ABS, and some selected metals. Although this equipment presents some similarities in the sense of using plastic materials from domiciliary sweepings to make industrial products, as it is the case of a board of agglomerate, the method disclosed a in this document demands the construction of an industrial facility to carry out the method and to obtain the above cited industrial products thus obtained.

Another prior art related with the present invention includes U.S. Patent N° 5,302,331 of Jenkins referred to a waste treatment process for recycling household waste, garbage or trash into useful articles including in one preferred embodiment the steps of collecting the waste material, feeding the waste material into a pulverizer to convert the material to a powdery mass, adding water to the mass to form a slurry, adding a binder to the slurry to inhibit bacteriological growth, pouring or otherwise forming the slurry into a useful shape such as a block, or sheet, and allowing the formed shape to air dry under relatively low humidity. The resulting useful article may then be used as a building block, wallboard, ceiling tile and so on. In an alternative example, the binder is added directly to the pulverized waste material to produce a useful article such as a flexible roof shingle.

US 4 187 352 (Klobbie) discloses a low-pressure process for manufacturing articles from plastics synthetic waste material, comprising in particular polyethylene, polypropylene, PVC and ABS, in which the material is mixed, fluidized in an extruder and passed into a mould.

The manufacture of a product is indeed one object of the present invention, which is obtained from a recycled plastic-based domiciliary sweepings materials. Thus, the present invention allows an efficiently management of polluting sweeping materials so that a new, useful industrial product may be manufactured at low costs, time-effective and environmentally friendly manner. Because the raw material with which the product hereby proposed is free (in fact, trash), the economic profile of the present invention is so much interesting since useful industrial products, like just mentioned, may be manufactured without having to count on the purchase of raw material that is normally an important cost in the final price of the product.

### Summary of the Invention:

In accordance with a first aspect of the present invention, there is provided a method of manufacturing a solid product from recyclable plastics material from urban sweepings materials, as defined in appendant independent claim 1, to which reference should now be made .

In accordance with a second aspect of the present invention, there is provided a solid product as defined in appendant claim 5.

Embodiments of the present invention are defined in appendant dependent claims 2 to 4, and 6, to which reference should also now be made.

The product obtained by the present invention may be: posts, tables, rods, braces, moldings, cords, roadside ditches, boards or plates (like agglomerated wood) for the manufacture of all type of mouldable products such as, rods, sewers, posts, and any other product that can be made from a mouldable plastic-based material. In fact, without limiting the scope of protection of the present invention, it is possible to manufacture all type of products with the purposed material, since is an easily mouldable material, comprised of:
- a first component containing plastic polyethylene and polypropylene materials in a proportion that ranges between 25% and 30% of the final weight of the product;
- a second component of plastic PET type materials ranges between 30% and 40% of the total weight of the product;
- and a third component selected from: PVC, styrene, polyamides, polycarbonates, polystyrene, ABS, aluminium and cardboard.

The previously cited materials are worn out and extradited with simultaneous heat contribution to obtain the fusion of the plastic materials during the extrusion, and its mixture to offer a mouldable homogeneous mass.

In this way equipment may be provided for eliminating from rubbish dumps these highly toxic sweeping materials, and to turn them into an economically useful product.

The present equipment makes possible to reuse those plastics. Equipment suitable for carrying out the present invention may consist of a chassis on which several equipment is mounted for processing said sweeping materials, in a completely independent way. That is, said chassis includes an own electricity-generating group, with two engines fed with oil gas. Said engines impel all the mechanisms involved in the process, water and fuel tanks, water pumps, cooling equipment and all the necessary to carry out the operation in a completely independent way.

The above is relevant considering that the physical place where the operation of this equipment is carried out (next to a rubbish dump) has none of the most elementary means to make an operation, such as water, electric power, gas, fuel, etc.

In summary we can mention that the product hereby proposed consists of a first component that contain plastic polyethylene materials and polypropylene materials of a proportion that ranges between 25% and 30% of the total weight of the product; a second component of PET type plastic materials ranges between 30% and 40% of the total weight of the product; and a third selected component of the group consisting of: PVC, styrene, polyamides, polycarbonates, polystyrene, ABS, aluminium and cardboard. The present invention proposes a procedure for the obtaining of the raw material for the manufacture of the above-cited product, including the stages of:
- separating from sweepings materials plastic materials found (for example, without classifying nor washing them);
- crushing this material in a blades mill;
- heating and extruding the milled or crushed material at a temperature of around 300 °C;
- pouring melted material in a mold;
- cooling and taking off the product from the mold.

There is also disclosed a transportable independent recycling equipment including a chassis mounted on wheels in which a belt conveyor is mounted that leads the material of non-classified plastic sweeping materials until a mill, which grinds this product and it later places it in a chain dump that transports the grinded product until a hopper. This hopper is a load hopper of a screw extruder which during its operation melt and kneads already worn out plastics, since it rises the temperature of the camera until 300° C, that is a temperature higher than the temperature to which these materials are normally melted.

Once processed by the extruder, the material becomes in semi-liquid state and is expelled by the extruder and falls within a mold which in agreement with its form produces an industrial product as is explained before. This mold full of hot melted material is later introduced within water coolant trays. Once cool, the product can be taken out from the mold ready to be used.

### Brief description of drawings:

The above cited are some of the relevant improvements purposed by the present invention, which will become apparent from the following specification. This specification should be interpreted with the attached drawings, as an exemplary and non limitative illustration of the invention and related apparatus, through which:
Figure 1 is a general perspective view of a series of products obtainable in agreement with the present invention;
Figure 2 is a perspective view of equipment that includes a trailer and the basic before mentioned elements;
Figure 3 is a lateral elevation view that shows the equipment from the belt conveyor including the mill, the chain dump and the extruder;
Figure 4 is a perspective detailed view of the extruder tip and the molds; finally:
Figure 5 is a block diagram that schematically shows the process involved in the manufacture of industrial pieces from the use of the proposed recycling equipment.

### Detailed description of the invention:

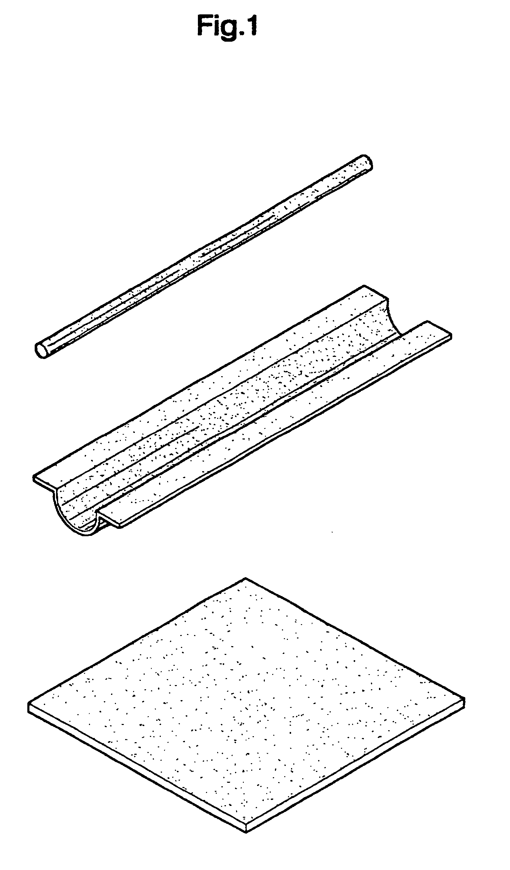

We will firstly make reference to Figure 1. Several industrial products manufactured in accordance with the guidelines purposed by the present invention are shown, for example: a rod, a sewer, an agglomerated wood-type board.

In fact, it is possible to emphasize that the above mentioned products should not be interpreted in a limitative way since many other articles can be made, without limitation, by means of a mold, and in agreement with the proposed technological innovation.

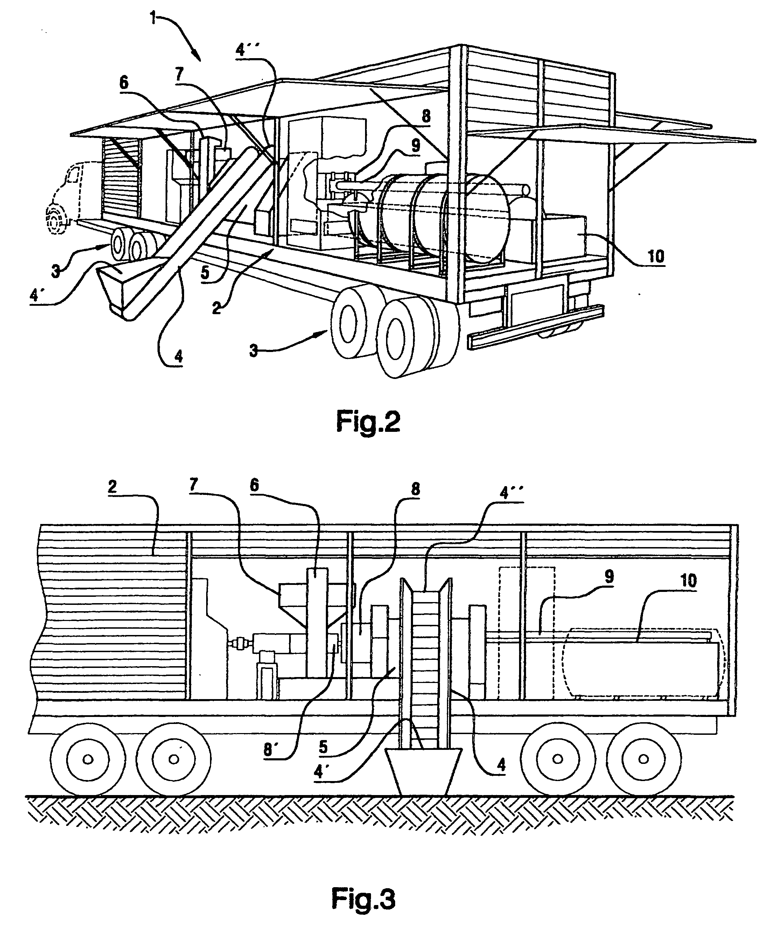

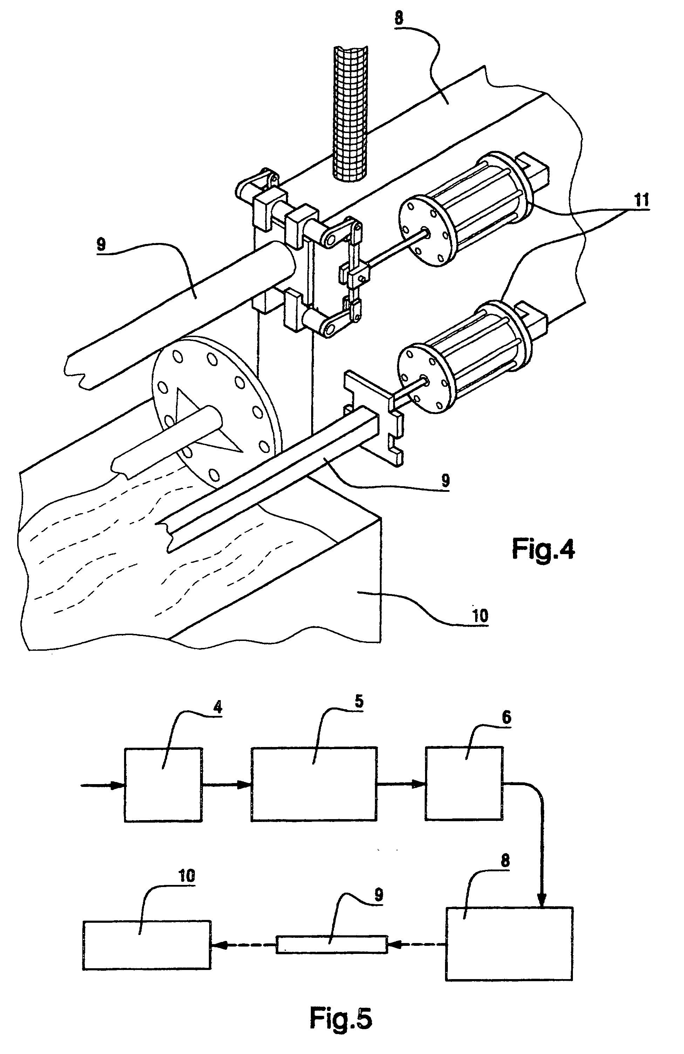

Referring now to figures 2-5, the recycling equipment indicated with general reference 1 includes a chassis 2 which is mounted in a pair of axles with wheels 3 and is useful to be hooked in a truck and to be taken to the place where it must make the operation in an independent form. As it is clearly seen in figure 2, a belt conveyor 4 is mounted in whose inlet mouth 4' the materials to be recycled are fed. More particularly plastic packages and bottles found in the rubbish dumps where the proposed equipment is going to be worked. This conveyor belt elevates the materials and by its end 4'' they fall within a mill 5 which is the one in charge to grind these plastics until taking them to a controlled granulometry (depending on the type of material to be processed).

Once coming out of this mill, the buckets of a chain dump 6 overturn the worn out material given by mill 5 within the hopper 7 whose outlet mouth 7' ends at inlet mouth 8' of a screw extruder 8.

As usual, this extruder has heating means (not illustrated) for raising the temperature of the extruder internal camera until 300° C. The extruder's screw forward the mass of worn out materials causes two simultaneous effects: kneading and melting this plastic materials in a semi fluid state.

Once coming out the extruder, semi fluid material falls within a mold 9 in charge of receiving and moulding said semi fluid material. This mold is then submerged soon in a water tray 10 to cause the cooling and solidification of the plastic semi fluid material thus introduced in the mold. Once the mold cools off, the piece is taken off the mold using a pneumatic cylinder 11.

It is obvious that the final form of the product thus obtained will depend on the form of the mold that is used, but as it was previously specified posts, tables, rods and the like may be manufactured by using the proposed process for recycling sweeping materials, basically urban sweeping materials that generate a great contamination.

One of the most important features and novel characteristics of the described equipment resides on its autonomy since it does not require the provision of energy from the outside nor water. To reach that goal the equipment includes two Diesel engines, for moving the extruder's screw and the mill, as well as a fuel tank that feeds them and a water tank for the cooling trays.

The proposed equipment may be moved until the place where the sweeping materials are obtained, thus avoiding the manipulation of sweepings materials usually involving a great cost. This is particularly important taking into account that great amounts of sweeping materials are required to be able to select the necessary plastic-based materials for the purposed process.

In addition, in one embodiment of the present invention the plastic sweeping materials are not reclassified neither are they washed nor prepared, but are used as obtained from the rubbish dump. They may be mixed with polyethylene and polypropylene as any other plastic substance. Also small amounts of other materials can be added, for example metals, without altering the product since they are melted in the same physical procedure of overheating the extruder camera.

In addition this process does not use any type of additional product and products of relative uniform grey colour are obtained with certain pigmentations of other tonalities that have infinity of industrial uses based on the mold that is preselected.

Once finished the product it is so solid that can be worked as wood and it has applications in several fields of the industry and construction. The obtained rods or products can be turned, hammered, nailed, painted, etc. and it is possible to be worked with the same machines used for wood works. Considering that the raw material used for manufacturing the purposed product is trash, it is important to point out that the finished product is absolutely sterilized due to the submission of the raw material to extremely high temperatures. Finally it is possible to emphasize that the equipment counts on an own electricity-generating group that electrically feeds the circuit of the equipment.

Finally, illustrative and non-limitative examples are detailed below, describing a qualitative-quantitative way for processing selected and classified materials obtained from urban sweeping materials.

### Example 1:

20 Kg. of sweeping materials were processed from trash raw material containing 10 Kg. of polyethylene, 3,2 Kg. of PET-type materials and the remaining as a mix including PVC and polyamide. Said processing step was carried out by a continuous extrusion in a conventional screw extruder at a temperature kept at a range of 198 °C - 205 °C, able to keep the mass viscosity sufficiently low to obtain a suitable extrusion flow. At the end of the extruder the semi fluid material is poured in molds for obtaining 19,22 kg of melted product consolidated in blocks.

### Example 2:

500 Kg. of classified and selected sweeping material from urban trash previously washed, drained and worn out and finally homogenized were processed comprising: 40% of PET-type plastic material, 5% of cardboard, 20% of polycarbonates, 15% of polypropylene and 20% de polystyrene. This mix was processed and extruded as described above in Example 1 obtaining rods of 5; 1,0 and 2,0 cm of diameter.

In a similar operation, homogeneously colored rods were obtained, including in the mass ferric oxide as a dust incorporated in the melted mass during the extrusion process.

## Claims

1. A method of manufacturing a solid product from recyclable plastics materials from urban sweepings materials, comprising: the following steps of:
separating, from urban sweepings materials, a first component A) containing polyethylene and polypropylene plastics materials; a second component B) of PET-type plastics materials; and a third component C) selected from the group of: PVC, styrene, polyamides, polycarbonates, polystyrene, ABS, aluminium and cardboard;
providing a mixture comprising the components A, B and C, wherein the proportions of components A and B are respectively between 25% and 30%, and between 30% and 40%, of the total weight of the product;
crushing the mixture in a blades mill; heating and extruding the crushed mixture at a temperature of around 300°C to form the molten material;
pouring said molten material in a mould; and
cooling and taking off the solid product from the mould.

2. A method in accordance with claim 1, wherein said components are obtained from domiciliary sweepings materials.

3. A method in accordance with claim 2, wherein the sweepings are not washed or dried.

4. A method according to any of the preceding claims, where in the mold has one of the following forms:
posts, tables, rods, braces, moldings, cords, roadside ditches, boards or plates.

5. A solid product produced from recyclable plastics materials from urban sweepings materials, comprising: a first component A) containing polyethylene and polypropylene plastics materials; a second component B) of PET-type plastics materials and a third component C) selected from the group of: PCV, styrene, polyamides, polycarbonates, polystyrene, ABS, aluminium and cardboard; wherein the proportions of components A and B are respectively between 25% and 30%, and between 30% and 40%, of the total weight of the product; obtainable by the method of any one of claims 1 to 4.

6. A sodid product according to claim 5, wherein the solid product is similar to a wooden product.

## Patentansprüche

1. Verfahren zur Herstellung eines festen Produkts aus recycelbarem Kunststoffmaterial, das aus zusammengefegtem städtischen Abfall stammt, welches umfasst: das Gießen des geschmolzenen Materials in eine Form; und das Abkühlen und Entnehmen des festen Produkts aus der Form, mit den folgenden Schritten:
Aussondern eines ersten Bestandteils A, der Polyethylen- und Polypropylen-Kunststoffmaterial enthält, aus dem zusammengefegten städtischen Abfall; eines zweiten Bestandteils B) aus PET-Kunststoffmaterial; und eines dritten Bestandteils C), ausgewählt aus der Gruppe: PVC, Styrol, Polyamide, Polycarbonate, Polystyrol, ABS, Aluminium und Pappe;
Bereitstellen eines Gemisches, welches die Bestandteile A, B und C enthält, wobei die Anteile der Bestandteile A und B jeweils zwischen 25 % und 30 % und zwischen 30 % und 40 % des Gesamtgewichts des Produkts liegen.
Zerkleinern des Gemisches in einer Messermühle; und
Erhitzen und Extrudieren des zerkleinerten Gemisches bei einer Temperatur von rund 300° C für die Ausbildung des geschmolzenen Materials;

2. Verfahren gemäß Anspruch 1, wobei die Bestandteile aus zusammengefegtem häuslichen Abfall stammen.

3. Verfahren gemäß Anspruch 2, wobei der zusammengefegte Abfall nicht gewaschen oder getrocknet wird.

4. Verfahren gemäß einem der vorhergehenden Ansprüche, wobei die Gussform eine der folgenden Formen aufweist: Pfosten, Platten, Stangen, Streben, Formteile, Litzen, Straßen-Ablaufrinnen, Planken oder Tafeln.

5. Ein festes Produkt, hergestellt aus recycelbarem Kunststoffmaterial, das aus zusammengefegtem städtischen Abfall stammt, welches umfasst: einen ersten Bestandteil A, der Polyethylen- und Polypropylen-Kunststoffmaterial enthält, einen zweiten Bestandteil B) aus PET-Kunststoffmaterial; und einen dritten Bestandteil C), ausgewählt aus der Gruppe: PVC, Styrol, Polyamide, Polycarbonate, Polystyrol, ABS, Aluminium und Pappe; wobei die Anteile der Bestandteile A und B jeweils zwischen 25 % und 30 % und zwischen 30 % und 40 % des Gesamtgewichts des Produkts liegen, das gemäß dem Verfahren nach einem der Ansprüche 1 bis 4 erhalten werden kann.

6. Ein festes Produkt gemäß Anspruch 5, wobei das feste Produkt einem Produkt aus Holz ähnlich ist.

## Revendications

1. Procédé de fabrication d'un produit solide à partir de matières plastiques recyclables provenant de matières issues de balayures urbaines, comprenant les étapes suivantes consistant à :
séparer, des matières issues de balayures urbaines, un premier composant A) contenant des matières plastiques à base de polyéthylène et de polypropylène ; un deuxième composant B) provenant de matières plastiques du type PET ; et un troisième composant C) sélectionné dans le groupe constitué par le PVC, le styrène, les polyamides, les polycarbonates, le polystyrène, l'ABS, l'aluminium et le carton ;
fournir un mélange comprenant les composants A, B et C, dans lequel les proportions des composants A et B sont respectivement comprises entre 25 % et 30 %, et entre 30 % et 40 % du poids total du produit ;
broyer le mélange dans un broyeur à pales ;
chauffer et extruder le mélange broyé à une température d'environ 300 °C pour former le matériau fondu ;
verser ledit matériau fondu dans un moule ; et
refroidir et extraire le produit solide du moule.

2. Procédé selon la revendication 1, dans lequel lesdits composants sont obtenus à partir de matières issues de balayures ménagères.

3. Procédé selon la revendication 2, dans lequel les balayures ne sont ni lavées, ni séchées.

4. Procédé selon l'une quelconque des revendications précédentes, dans lequel le moule présente l'une des formes suivantes: colonnes, tables, baguettes, entretoises, moulages, cordes, rigoles pour bordure de chaussée, panneaux ou plaques.

5. Produit solide obtenu à partir de matières plastiques recyclables provenant de matières issues de balayures urbaines, comprenant: un premier composant A) contenant des matières plastiques à base de polyéthylène et de polypropylène ; un deuxième composant B) provenant de matières plastiques du type PET et un troisième composant C) sélectionné dans le groupe constitué par le PVC, le styrène, les polyamides, les polycarbonates, le polystyrène, l'ABS, l'aluminium et le carton ; dans lequel les proportions des composants A et B sont respectivement comprises entre 25 % et 30 %, et entre 30 % et 40 % du poids total du produit ; pouvant être obtenu par le procédé selon l'une quelconque des revendications 1 à 4.

6. Produit solide selon la revendication 5, dans lequel le produit solide est similaire à un produit à base de bois.
